# DEMANDE DE BREVET EUROPEEN

(11) **EP 0 565 408 A1**
(43) Date de publication de la demande: **13.10.1993**
(21) Numéro de dépôt: 93400827.7
(22) Date de dépôt: 31.03.1993
(51) Int. Cl.: G06F 3/02, F02D 41/14

(54) **Système de commande d'un ordinateur à partir d'une console opérateur**

(30) Priorité: 06.04.1992 FR 9204170
(71) Demandeur: SYSTAR, F-92213 Saint-Cloud (FR)
(72) Inventeur: Beauchamp, Bernard, F-75007 Paris (FR)
(74) Mandataire: Doireau, Marc

(57) **Abrégé**

L'invention concerne un système de commande (1) d'un ordinateur (2) à partir d'une console opérateur (3) ayant au moins une liaison d'entrée (L2) sur laquelle peut se raccorder un dispositif d'entrée manuelle d'informations, tel qu'un clavier (4). Un circuit interface (5) est branché sur la liaison d'entrée (L2) pour transmettre automatiquement à la console (3) des données, des instructions de commande et/ou des messages, à partir d'au moins un terminal (T).

## Description

La présente invention concerne un système de commande d'un ordinateur à partir d'une console opérateur ayant au moins une liaison d'entrée sur laquelle peut se raccorder un dispositif d'entrée manuelle d'informations, tel qu'un clavier ou une souris par exemple.

Une console d'ordinateur est notamment équipée d'un ensemble de dispositifs tels qu'un écran, une imprimante, un pupitre avec des interrupteurs et des voyants, et d'une unité de gestion qui pilote l'ensemble de ces dispositifs. Une telle console est toujours connectée in-situ à un clavier opérateur par une liaison d'entrée, et elle est connectée à l'ordinateur par une liaison physique imposée par le constructeur informatique. Concrètement, l'unité de gestion de la console traite également tous les signaux à transmettre ou reçus de l'ordinateur en fonction d'une part, du type de la liaison physique entre la console et l'ordinateur et, d'autre part, du type du protocole d'échange des informations qui est également imposé par le constructeur informatique.

Dans ces conditions, un utilisateur se retrouve le plus souvent dans l'impossibilité de faire lui-même des adaptations tant au niveau de la connectique de liaison entre la console et l'ordinateur, qu'au niveau du protocole qui gère l'échange des informations entre la console et l'ordinateur, si bien que le système est en quelque sorte figé.

Le but de l'invention est de perfectionner un tel système de commande qui requiert la présence d'un opérateur devant le clavier de la console et de permettre une commande à distance de la console à partir d'un terminal de simulation du clavier et elle propose à cet effet un système de commande du type précité qui est caractérisé en ce qu'il comprend un circuit interface branché sur ladite liaison d'entrée clavier d'une console opérateur pour transmettre à cette dernière des informations telles que des données, des adresses ou des instructions de commande émises depuis au moins un terminal.

Ainsi, selon une autre caractéristique de l'invention, le circuit interface comprend notamment un module de traitement pour convertir les informations transmises par le terminal au format des informations traitées par la console, un module d'entrée connecté en entrée au terminal et en sortie au module de traitement, et un module de sortie connecté en entrée au module de traitement et en sortie à la liaison d'entrée de la console, la conversion du code de transmission pouvant être réalisée au niveau du terminal ou au niveau du module de traitement.

Selon une autre caractéristique de l'invention, le module d'entrée du circuit interface qui reçoit les informations transmises par le terminal, comprend un circuit adaptateur pour adapter les caractéristiques des signaux représentatifs des informations reçues par le terminal à celles des signaux traités par le module de traitement.

Aussi, selon un premier mode de réalisation de l'invention, lorsque la liaison entre le terminal et le circuit interface est du type série et que l'unité de traitement travaille en parallèle, le module d'entrée est complété par un convertisseur série-parallèle, et le module de sortie comprend un convertisseur parallèle-série , la liaison entre le circuit interface et la console opérateur étant généralement du type série.

Conformément à ce premier mode de réalisation, il est possible d'envisager deux options. La première option consiste à prévoir dans le circuit interface un second module d'entrée pour raccorder un clavier ou une souris par exemple, ce second module d'entrée comprenant un convertisseur série-parallèle pour transmettre des informations sous forme parallèle au module de traitement. La seconde option consiste à ne pas raccorder au circuit interface de clavier ou de souris.

Selon un second mode de réalisation de l'invention, lorsque la liaison entre le terminal et le circuit interface est du type parallèle, le module d'entrée ne comprend pas de convertisseur série-parallèle , et le module de sortie, comme dans le premier mode de réalisation, comprend un convertisseur parallèle-série .

Conformément à un second mode de réalisation, il est également possible d'envisager deux options comme précédemment. Avec l'option branchement d'un clavier ou d'une souris, le circuit interface comprendra un second module d'entrée avec un convertisseur série-parallèle.

Ainsi, quel que soit le mode de réalisation, le circuit interface permet une commande à distance de la console opérateur de l'ordinateur, ou une automatisation, à distance ou non, de la commande de cette console.

Selon une autre caractéristique de l'invention, le circuit de traitement du circuit interface peut être composé par un micro-processeur dans la mémoire duquel peut être préenregistrée une table de transcodage, pour assurer ainsi la conversion de code nécessaire entre les informations transmises par le terminal et celles reçues par la console opérateur, dans le cas où cette conversion n'est pas effectuée dans le terminal.

Enfin, le système peut être complété par une liaison de la console vers le terminal et/ou de l'ordinateur vers le terminal pour permettre un dialogue interactif.

Ainsi, l'invention permet une plus grande souplesse d'accès à une console d'ordinateur avec un circuit interface ayant une structure simple qui peut être facilement adaptée à tous les matériels informatiques.

En particulier, le circuit interface branché sur la liaison d'entrée clavier de la console est indépendant du type de la liaison physique et du type de protocole des échanges d'informations entre la console et l'ordinateur, ces problèmes étant gérés au niveau de l'unité de gestion de la console.

D'une manière générale, le système de commande selon l'invention peut être avantageusement utilisé pour la réalisation d'un système de télépupitrage, de concentration de consoles et/ou d'automatisation de consoles, sans qu'il soit nécessaire d'apporter des modifications tant sur le plan matériel, que sur le plan logiciel, au matériel informatique avec lequel il est associé. Autrement dit, un système de commande selon l'invention peut être facilement mis en place sans qu'il soit nécessaire de reconfigurer l'architecture du système auquel il vient se brancher.

D'autres avantages, caractéristiques et détails de l'invention ressortiront de la description explicative qui va suivre faite en référence aux dessins annexés, donnés uniquement à titre d'exemple et dans lesquels :
- la figure 1 illustre sous forme de schéma-bloc le principe du système de commande conforme à l'invention,
- la figure 2 illustre sous forme de schéma-bloc la structure du circuit interface de la figure 1 suivant un premier mode de réalisation de l'invention,
- la figure 3 illustre sous forme de schéma-bloc la structure du circuit interface selon un second mode de réalisation de l'invention,
- et la figure 4 illustre sous forme de schéma-bloc une option supplémentaire qui peut être ajoutée au système de commande conforme à l'invention.

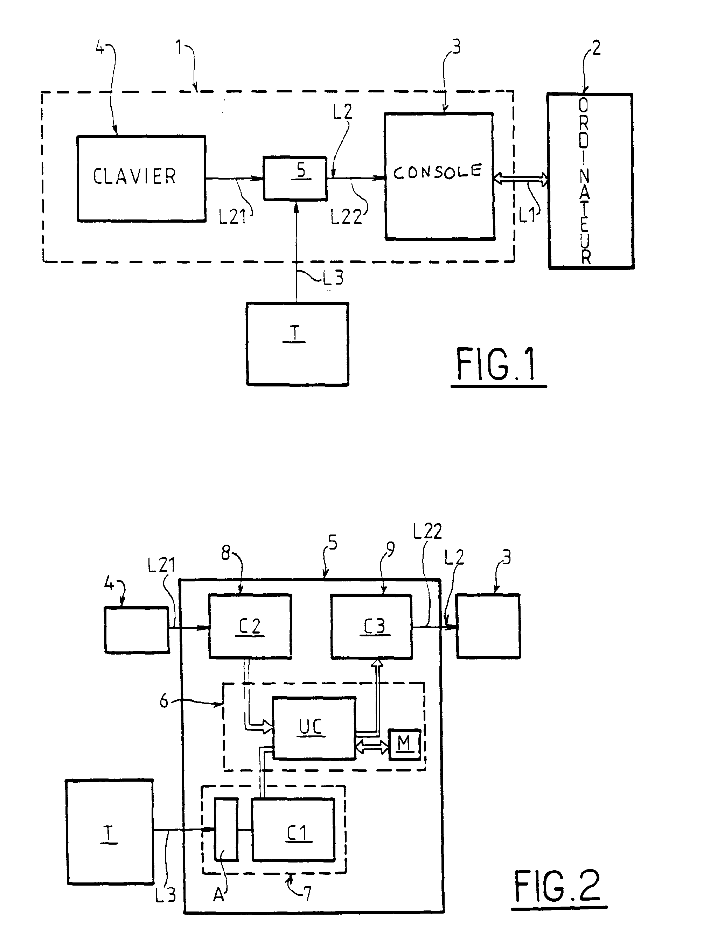

En se reportant à la figure 1, il est représenté sous forme de schéma-bloc la structure générale d'un système de commande 1 d'un ordinateur 2 selon l'invention.

Le système de commande 1 comprend, d'une façon connue en soi, une console opérateur 3 et un dispositif d'entrée manuelle d'informations, tel qu'un clavier 4. La console 3 est notamment équipée d'un écran de visualisation, d'une imprimante, d'un ensemble d'interrupteurs et de voyants,...(non représentés), par lequel un opérateur peut communiquer avec les diverses unités de l'ordinateur 2 sous le contrôle d'une unité de gestion. La console 3 est connectée d'une part à l'ordinateur 2 par une liaison L1 de type série ou parallèle et, d'autre part, au clavier 4 par une liaison d'entrée L2, de type série.

Selon l'invention, un circuit interface 5 est intercalé sur la liaison série L2 pour permettre à un terminal T d'accéder à la console 3 et de lui envoyer des informations. Autrement dit, la liaison série L2 est scindée en une première liaison série L21 entre le clavier4 et le circuit interface 5, et en une deuxième liaison série L22 entre l'interface 5 et la console 3.

Le circuit interface 5 tel que représenté sous forme de schéma-bloc à la figure 2 selon un premier mode de réalisation, comprend notamment une unité de traitement 6, un premier module d'entrée 7 connecté à la liaison L3 entre le terminal T et le circuit interface 5, un second module d'entrée 8 connecté à la liaison L21 entre le clavier 4 et le circuit interface 5, et un module de sortie 9 connecté à la liaison L22 entre le circuit interface 5 et la console 3.

Le premier module d'entrée 7 comprend un circuit adaptateur A pour adapter les caractéristiques des signaux représentatifs des informations reçues par le terminal T à celles des signaux traités par le circuit interface 5. Dans ce mode de réalisation, la liaison L3 entre le terminal T et le circuit adaptateur A est une liaison série, de sorte que le module d'entrée 7 comprend également un convertisseur série-parallèle C1 pour transmettre à l'unité de traitement 6 des signaux sous forme parallèle.

L'unité de traitement 6 peut être par exemple un microprocesseur avec une unité centrale UC assso- ciée à une mémoire M.

Le second module d'entrée 8 comprend essentiellement un convertisseur série-parallèle C2 pour transmettre à l'unité de traitement 6 des signaux sous forme parallèle à partir des signaux de type série transmis par le clavier 4 sur la liaison L21.

Le module de sortie 9 comprend un convertisseur parallèle-série pour transmettre sur la liaison L22 de la console 3 des signaux sous forme série à partir des signaux parallèles transmis par l'unité de traitement 6.

La structure du circuit interface 5 tel que représenté à la figure 2 peut être simplifiée dans le cas où la console 3 n'est pas connectée au clavier 4. Dans cette forme de réalisation simplifiée, le second module d'entrée 7 est soit déconnecté, soit absent du circuit interface 5.

Selon cette version simplifiée du circuit interface 5, la console 3 est uniquement commandée à partir des informations transmises par le terminal T. Ces informations transmises par la liaison série L3, par exemple de type RS 232, sont traitées par le module adaptateur A pour conformer les caractéristiques des signaux transmis aux caractéristiques des signaux traités par le circuit interface 5. Le module adaptateur A assure par exemple une adaptation en tension. Les signaux série ainsi traités sont ensuite transmis au convertisseur série-parallèle C1 avant d'être envoyés au module de traitement 6. Dans le cas où le code de transmission des informations envoyées par le terminal T est différent du code de transmission accepté par la console 3, l'unité centrale UC assure la conversion de code à partir d'une table de transcodage qui est pré-enregistrée dans sa mémoire M. Ensuite, les signaux sont transmis au convertisseur parallèle-série C3 du module de sortie 9, puis acheminés par la liaison série L22 à la console 3, ce dernier ne faisant pas la différence entre des informations transmises par le clavier 4 ou par le terminal T.

D'une manière générale, le terminal T est un mini-ordinateur ou micro-ordinateur qui envoie automatiquement ou par un opérateur, à l'aide d'un clavier par exemple branché sur le terminal, des informations à la console 3 de l'ordinateur 2, cette dernière pouvant être constituée par un terminal du type non- intelligent ou par un terminal du type intelligent tel qu'un micro-ordinateur par exemple.

Dans sa version avec le second module d'entrée 7 connecté au clavier 4, il est possible de commander la console 3 de manière manuelle à partir des informations transmises par le clavier 4, ou d'une manière automatique à partir des informations transmises par le terminal T.

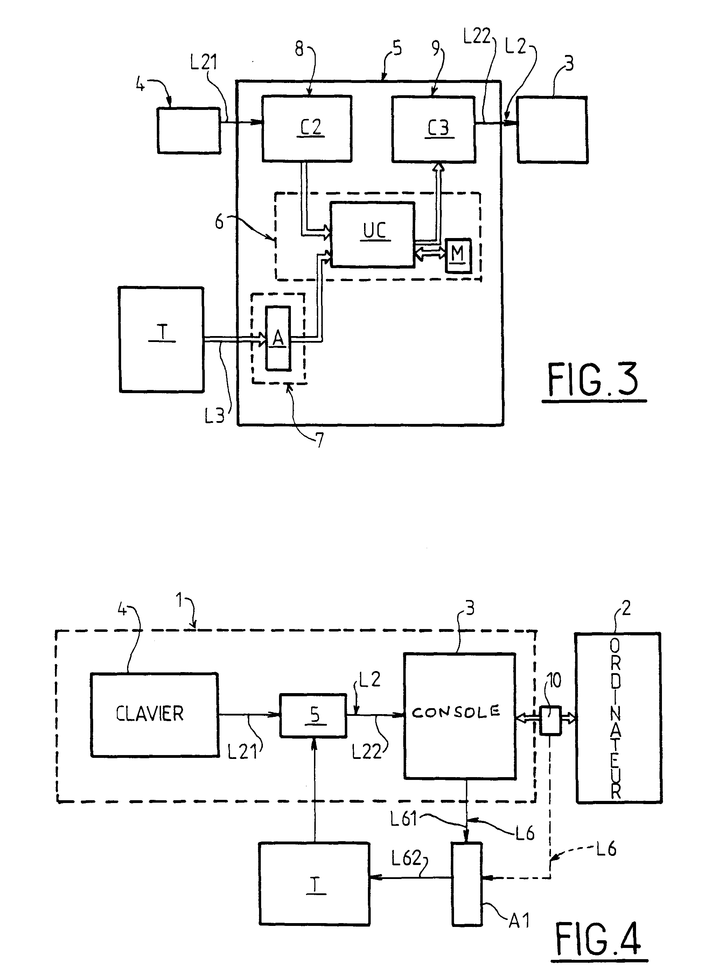

Dans le second mode de réalisation illustré sous forme de schéma-bloc à la figure 3, la liaison L3 entre le terminal T et le premier module d'entrée 7 du circuit interface 5 est du type parallèle. Dans ce cas, le premier module d'entrée 7 comprend seulement un module adaptateur A, les autres circuits constitutifs du circuit interface 5 restent identiques à ceux représentés à la figure 2. Le circuit interface 5 dans le cas de la figure 3 est globalement identique à celui qui a été décrit en référence à la figure 2, en pouvant dissocier également une version simplifiée sans le raccordement au clavier 4.

Le circuit interface 5 selon l'invention peut comporter des options supplémentaires, comme celle qui est schématiquement illustrée à la figure 4.

Dans l'exemple représenté, il est prévu une possibilité de dialogue entre l'ordinateur 2 et le terminal T par l'intermédiaire d'une liaison L6 entre la console 3 et le terminal T, avec interposition d'un circuit adap- tateurAt. Cette liaison série L6 se scinde en une première liaison L61 entre une sortie de la console 3 et l'entrée du circuit adaptateur A1, et une seconde liaison L62 entre la sortie du circuit adaptateur A1 et une entrée du terminal T.

En variante, cette liaison L6 entre l'odinateur 2 et le terminal T peut s'effectuer à partir d'un boîtier de raccordement 10 branché sur la liaison L1 entre la console 3 et l'ordinateur 2.

Grâce à cette liaison L6, il est possible par exemple au terminal T de recevoir des messages transmis à la console 3 par l'ordinateur 2.

D'une manière générale, le circuit interface 5 peut se présenter sous la forme d'un boîtier séparé avec sa propre source d'alimentation ou être incorporé dans le terminal T en étant alors alimenté par la source d'alimentation de celui-ci.

Bien entendu, l'invention n'est nullement limitée aux modes de réalisation qui ont été donnés qu'à titre d'exemple. En effet, il est possible d'adapter le système pour tenir compte de particularités spécifiques au milieu informatique dans lequel est inséré un tel système de commande. En particulier, il est possible de concevoir un module de traitement 6 qui travaille en série par exemple, et un circuit de gestion de priorité dans ce module, si l'on envisage que le clavier 4 et le terminal T puissent envoyer simultanément des informations.

## Revendications

1. Système de commande d'un ordinateur à partir d'une console opérateur ayant au moins une liaison d'entrée sur laquelle peut se raccorder un dispositif d'entrée manuelle d'informations, tel qu'un clavier par exemple, caractérisé en ce qu'il comprend un circuit interface (5) branché sur ladite liaison d'entrée clavier (L2) pour transmettre à la console (3) des données, des instructions de commande et/ou des messages, à partir d'au moins un terminal (T).

2. Système de commande selon la revendication 1, caractérisé en ce que le circuit interface (5) comprend au moins une unité de traitement (6), un premier module d'entrée (7) relié en entrée à une liaison (L3) sur laquelle est raccordé le terminai (T), et en sortie à l'unité de traitement ( 6 ), et un module de sortie ( 9 ) relié en entrée à l'unité de traitement (6) et en sortie à la liaison d'entrée (L21) de la console (3).

3. Système de commande selon la revendication 2, caractérisé en ce que le premier module d'entrée (7) comprend un circuit adaptateur (A) pour adapter les signaux transmis par la liaison (L3) aux caractéristiques des signaux traités par le circuit interface (5).

4. Système de commande selon la revendication 3, caractérisé en ce que le premier module d'entrée (7) comprend également un convertisseur série-parallèle (C1) pour transmettre à l'unité de traitement (6) des signaux sous forme parallèle, lorsque la liaison (L3) est de type série.

5. Système de commande selon l'une quelconque des revendications 2 à 4, caractérisé en ce que la liaison d'entrée (L2) est de type série, et en ce que le module de sortie (9) comprend un convertisseur parallèle-série (C3) pour transmettre à la console (3) sous forme série les signaux traités par l'unité de traitement (6).

6. Système de commande selon l'une quelconque des revendications 2 à 4, caractérisé en ce que le circuit interface (5) comprend également un second module d'entrée (8) relié à un dispositif d'entrée manuelle d'informations, tel qu'un clavier (4).

7. Système de commande selon la revendication 5, caractérisé en ce que le circuit interface (5) comprend également un second module d'entrée (8) relié à un dispositif d'entrée manuelle d'informations, tel qu'un clavier (4), et un convertisseur série-parallèle (C2).

8. Système de commande selon l'une quelconque des revendications 2 à 7, caractérisé en ce que l'unité de traitement (8) convertit les informations transmises par le terminal (T) en informations acceptables par la console (3).

9. Système de commande selon la revendication 8, caractérisé en ce que l'unité de traitement (8) comprend une unité centrale (UC) associée à une mémoire (M) où est pré-enregistrée au moins une table de transcodage.

10. Système de commande selon l'une quelconque des revendications 2 à 8, caractérisé en ce que la console (3) est reliée au terminal (T) par une liaison (L6) pour transmettre au terminal (T) des messages adressés à la console (3).

11. Système de commande selon l'une quelconque des revendications précédentes, caractérisé en ce que le terminal (T) est un mini ou micro-ordinateur par exemple.

12. Système de commande selon l'une quelconque des revendications précédentes, caractérisé en ce que la console (3) est constituée d'un micro-ordinateur connecté à l'ordinateur principal (2).
